# EUROPEAN PATENT APPLICATION

(11) **EP 2 075 477 A1**
(43) Date of publication of application: **01.07.2009**
(21) Application number: 08022227.6
(22) Date of filing: 22.12.2008
(51) Int. Cl.: F16B 19/00, F16B 21/08

(54) **Internal thread hole closing plug**

(30) Priority: 26.12.2007 JP 2007334359
(71) Applicant: Newfrey LLC, Newark, Delaware 19711 (US)
(72) Inventor: Yuta, Kiyoteru, Toyohashi-shi Aichi-ken (JP); Tamaoku, Takashi, Toyohashi-shi Aichi-ken (JP); Hanada, Makoto, Torrance, CA 90503 (US)
(74) Representative: Steil, Christian

(57) **Abstract**

An internal thread hole closing plug (11) for closing an internal thread hole (9) in a weld nut (8) and a hole in a body panel (6) includes a flange (13), column (14) and elastic latching pieces (15) that extend from the column toward the flange and away from the column. The tips (23A,23B) of the elastic latching pieces engage the thread flanks of the internal thread hole in correspondence with the pitch of the threads thereof to align the axis of the column with the axis of the internal thread hole. The pair of lower elastic latching pieces extend in one radial direction, centered on the column, and the pair of upper elastic latching pieces extend in a radial direction that crosses the lower elastic latching pieces. This causes the axis of the column to be aligned with the axis of the internal thread hole when the column is passed through the internal thread hole.

## Description

### Cross-Reference To Related Applications

This application claims priority from Japanese Patent Application No. 2007-334359, filed on December 26, 2007, the disclosure of which is incorporated herein by reference.

### Technical Field

The present invention relates to a plug member for closing an internal thread hole in an internal thread member secured to a member being attached to such as an automobile body panel, that is, to an internal thread hole closing plug.

### Background of the Invention

In order to attach various parts or the like to an automobile body panel, an internal thread member such as a weld nut is secured to the back surface thereof, and an acceptance hole and internal thread hole are formed so that an external thread member such as a bolt can be screwed therein. However, it is desirable that acceptance holes and internal thread holes not needed for the attachment of a part be closed with an internal thread hole closing plug to prevent the intrusion of water, dirt or other foreign matter.

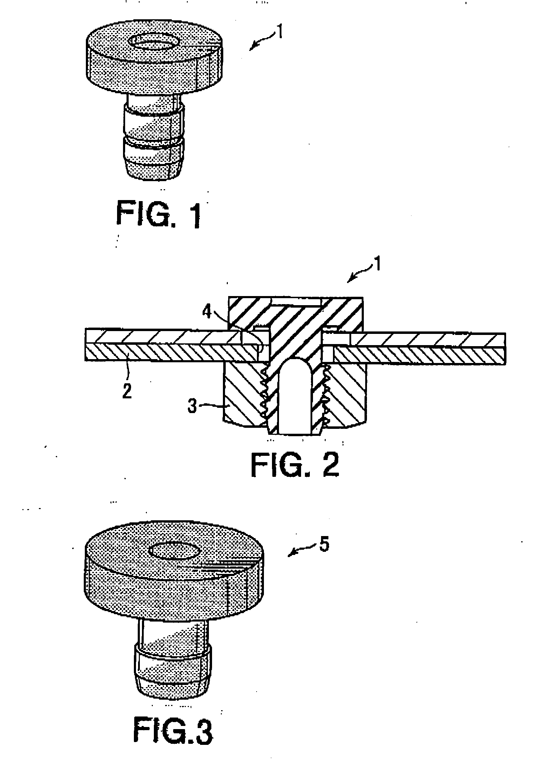

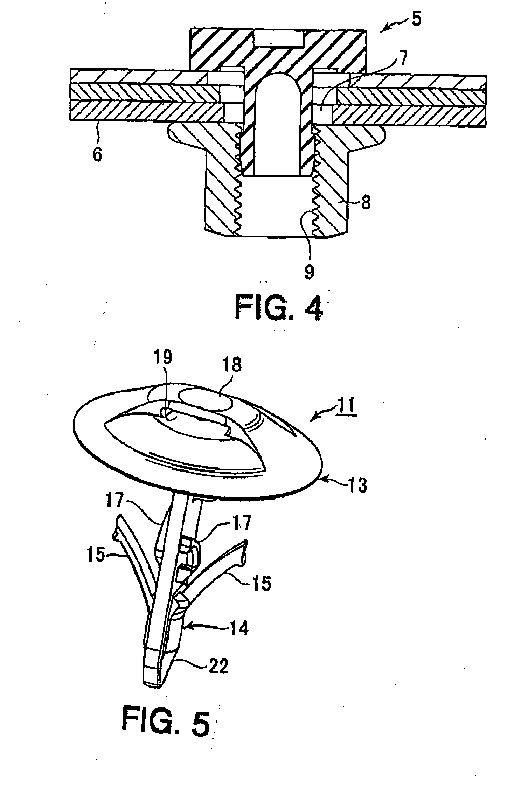

Figs. 1 to 4 diagram conventional internal thread hole closing plugs and depict the manner in which they are used. In Figs. 1 and 2, a hole closing plug 1, which is formed of a soft rubber such as natural rubber or of a soft resin, closes both an internal thread hole in a weld nut 3 welded to the back surface of a body panel 2 and a hole 4 in that body panel 2. In Figs. 3 and 4, a hole closing plug 5, which is formed of a soft rubber such as natural rubber or of a soft resin, having a larger diameter than that of the hole closing plug 1, closes a hole 7 in a body panel 6 that is thicker than the body panel 2. A weld nut 8 is welded to the back surface of the body panel 6 having the hole 7, and the hole closing plug 5 closes an internal thread hole 9 in the weld nut 8.

Patent Literature 1: JIKKAI [Unexamined Utility Model Application Publication] No. H7-028217/1995 (Gazette)

Patent Literature 2: JIKKAI No. S59-174413/1984 (Gazette)

Patent Literature 3: TOKKAI [Unexamined Patent Application Publication] No. H9-068209/1997 (Gazette)

Patent Literature 4: JIKKAI S64-39910/1989 (Gazette)

The hole closing plugs 1 and 5 diagrammed in Figs. 1 to 4 are formed of a soft material and are subject to falling out due to vibration or the like and are not satisfactory in terms of watertight sealing properties.

In Patent Literature 1, a hole closing plug is described. This hole closing plug is unsatisfactory in terms of watertight sealing properties and is also unsatisfactory in terms of good fitting properties when inserted into a nut hole and ease of detachment. In Patent Literature 2 to 4 are described fasteners for joining a separate attachment member to a panel-shaped member being attached, each of which comprises a shank for insertion into an attachment hole in the member being attached to and a flange for pressing against the attachment member, which shank has elastic latching pieces. These, however, are fasteners and are not internal thread hole closing plugs for closing internal thread holes in which internal threads are secured to a back surface.

The fastener cited in Patent Literature 2 is a fastener which is secured to an internal thread hole, but the members being attached to are members such as power poles exhibiting comparatively little vibration and cannot be said to be satisfactory in terms of preventing falling out associated with vibration or the like after being fitted in. The fastener cited in Patent Literature 3 is formed so that it can easily be detached without scratching interior lining material, and the elastic latching pieces of the shank thereof are not meant for latching in an internal thread hole. The fastener cited in Patent Literature 4 is a fastener capable of mutually joining a plurality of panels. In this fastener, for the purpose of joining the panels, many engagement convexities are formed, respectively, in a pair of engagement pieces that protrude outward to the sides from the tip of a shank that descends perpendicularly from a flange; whereupon, when the engagement pieces are inserted into one panel hole to effect provisional fastening and then inserted into a hole in another panel to be joined, which has been brought together with same, the panels are joined so that a provisional fastening function is exhibited. In this fastener cited in Patent Literature 4, also, the engagement pieces on the shank are not meant for fastening to an internal thread hole.

Accordingly, an aspect of exemplary embodiment of the present invention is to provide an internal thread hole closing plug of a comparatively simple configuration for closing internally threaded holes provided in members being attached to such as automobile body panels. Another aspect of the exemplary embodiment is to provide a hole closing plug wherein the watertight properties of the hole closing plug can be maintained at a high level.

### Summary of the Invention

According to an aspect of the present invention, an internal thread hole closing plug is provided for closing an internal thread hole in an internal thread member secured to the back surface of a member being attached to, such as a panel, and closing a hole in the member being attached to, which comprises: a flange of a size that will close the hole in the member being attached to; a column extending perpendicularly downward from the flange; and at least one pair of elastic latching pieces extending from the tip end of the column toward the flange and separating away from the column as they approach the flange; wherein: the elastic latching pieces are formed so that the tips thereof, corresponding to the lead angle in the thread flanks of the internal thread, engage the thread flanks; whereupon, when the column and the elastic latching pieces are inserted into the hole in the member being attached to and into the internal thread hole, the respective tips of the at least one pair of elastic latching pieces engage the thread flanks of the internal thread hole, acting so as to align the axis of the column with the axis of the internal thread hole, and the flange closes the hole in the member being attached to and the internal thread hole such that the axis of the column is aligned with the axis of the internal thread hole.

By the hole closing plug described above, an internal thread hole closing plug for closing internally threaded holes provided in automobile body panels and the like can be provided which has a comparatively simple configuration. Moreover, the respective tips of at least one pair of elastic latching pieces engage thread flanks in the internal thread hole and act so as to align the axis of the column with the axis of the internal thread hole. Also, with the axis of the column aligned with the axis of the internal thread hole, the flange closes the hole in the member being attached to and the internal thread hole. As a consequence, the axis of the column aligns with the axis of the internal thread hole, preventing an attachment wherewith the flange is slanted relative to the member being attached to. Thus, the edge of the flange can seal tightly against the member being attached to, and the watertight properties of the hole closing plug can be maintained at a high level.

In the hole closing plug described above, the elastic latching pieces comprise, at the tip end of the column, one pair of lower elastic latching pieces extending in one radial direction centered on the column and one pair of upper elastic latching pieces extending in another radial direction, centered on the column at a position between the lower elastic latching pieces and the flange and crossing the lower elastic latching pieces, whereby the lower elastic latching pieces and upper elastic latching pieces act, when the column passes through the internal thread hole, so as to align the axis of the column with the axis of the internal thread hole, so that the flange can seal even more tightly against the member being attached to and the watertight properties of the flange are enhanced. In this case, the one radial direction of the lower elastic latching pieces and the other radial direction of the upper elastic latching pieces may be mutually perpendicular. Also, one tip end of the pair of lower elastic latching pieces and one tip end of the pair of upper elastic latching pieces are formed so that the height position at which they engage the thread flanks, matched with the lead angle of the threads of the internal thread hole, is different from that of the other tip end of the pair of lower elastic latching pieces and that of the other tip end of the pair of upper elastic latching pieces. Thereby, alignment of the axis of the column with the axis of the internal thread hole will be made even more definite, attachment wherein the flange is slanted relative to the member being attached to can be prevented, the edge of the flange can more definitely seal tightly to the member being attached to and the watertight properties of the hole closing plug are maintained at an even higher level.

In the hole closing plug described above, moreover, provision may also be made so that the elastic latching pieces comprise one pair of elastic latching pieces extending in one radial direction centered on the column at an intermediate height position of the column; a pair of elastic pieces is provided in the column, extending in another radial direction, centered on the column in the vicinity of the tip end of the column and crossing the [radial direction of the] elastic latching pieces, whereupon the elastic latching pieces and the elastic pieces will act, when the column passes through the internal thread hole, so as to align the axis of the column with the axis of the internal thread hole, so that the flange can seal even more tightly against the member being attached to and the watertight properties of the flange are enhanced. In this case also, the one radial direction of the elastic latching pieces and the other radial direction of the elastic pieces may be mutually perpendicular. Also, one tip of one pair of elastic latching pieces is formed so that the height position at which it engages the thread flanks, matched with the lead angle of the threads of the internal thread hole, is different from that of the other tip of the pair of elastic latching pieces. Thereby, the axis of the column is even more definitely aligned with the axis of the internal thread hole, an attachment wherein the flange is slanted relative to the member being attached to can be prevented, the edge of the flange can definitely seal tightly against the member being attached to and the watertight properties of the hole closing plug can be maintained at an even higher level.

The hole closing plug described above is integrally formed of a thermoplastic synthetic resin. On the upper surface of the flange, a protruding ridge is formed for turning the flange about the axis of the column. This makes it easy to turn the flange in the opposite direction when detaching the plug. In the protruding ridge, a hole may be formed for passing the tip of a tool or a cord or the like. And, in the hole in the protruding ridge, a hemispherical protrusion is formed for narrowing the gap between [the protruding ridge and] the flange in a portion of the hole on the inside thereof for limiting flexure associated with pressure on the protruding ridge and making it less likely that a tool tip will slip out of the hole. In the portion thereof adjacent to the flange, the column is formed as a cylinder having a diameter that is close to but slightly smaller than the diameter of the internal thread hole of the internal thread holes to be plugged having the smallest diameter. This also aids in aligning the axis of the column with the axis of the internal thread hole.

### Brief Descriptions of Drawings

Fig. 1 is a diagonal view of a conventional hole closing plug.

Fig. 2 is a section diagramming how the hole closing plug of Fig. 1 is attached to holes in a body panel and a weld nut.

Fig. 3 is a diagonal view of a large-sized conventional hole closing plug.

Fig. 4 is a section diagramming how the hole closing plug of Fig. 3 is attached to holes in a body panel and a weld nut.

Fig. 5 is a diagonal view of a hole closing plug relating to a first exemplary embodiment of the present invention.

Fig. 6 is a plan of the hole closing plug of Fig. 5.

Fig. 7 is a front elevation of the hole closing plug of Fig. 5.

Fig. 8 is a side elevation of the hole closing plug of Fig. 7.

Fig. 9 is a section at the A-A line of the hole closing plug of Fig. 6.

Fig. 10 is a section at the B-B line of the hole closing plug of Fig. 6.

Fig. 11 is a section at the C-C line of the hole closing plug of Fig. 6.

Fig. 12(A) is a section at the D-D line of the hole closing plug of Fig. 7, 12(B) a section at the E-E line of the hole closing plug of Fig. 7 and 12(C) a section at the F-F line of the hole closing plug of Fig. 8.

Fig. 13 diagrams how the hole closing plug relating to the first embodiment of the present invention is attached to holes in a body panel and a weld nut, with 13(A) representing the hole closing plug in the same section as in Fig. 10 and 13(B) representing the hole closing plug in the same section as in Fig. 11.

Fig. 14 diagrams how the hole closing plug relating to the first embodiment of the present invention is attached to holes in a body panel and a weld nut, in like manner as Fig. 13, with 14(A) representing the.hole closing plug in the same section as in Fig. 10, and 14(B) representing the hole closing plug in the same section as in Fig. 11.

Fig. 15 diagrams how the hole closing plug relating to the first embodiment of the present invention is attached to holes in a body panel that is thicker than that of Fig. 13 and a weld nut that is longer than that of Fig. 13, with 15(A) representing the hole closing plug in the same section as in Fig. 10 and 15(B) representing the hole closing plug in the same section as in Fig. 11.

Fig. 16 is a diagonal view of a hole closing plug relating to a second embodiment of the present invention.

Fig. 17 is a front elevation of the hole closing plug of Fig. 16.

Fig. 18 is a plan of the hole closing plug of Fig. 16.

Fig. 19 is a side elevation of the hole closing plug of Fig. 17.

Fig. 20 is a section at the G-G line of the hole closing plug of Fig. 18.

Fig. 21 is a section at the H-H line of the hole closing plug of Fig. 18.

Fig. 22 diagrams how the hole closing plug relating to the second embodiment of the present invention is attached to holes in a body panel and a weld nut, with 22(A) representing the hole closing plug in the same section as in Fig. 20 and 22(B) representing the hole closing plug in the same section as in Fig. 21.

Fig. 23 diagrams how the hole closing plug relating to the second embodiment of the present invention is attached to holes in a body panel that is thicker than that of Fig. 22 and a weld nut that is longer than that of Fig. 22, with 23(A) representing the hole closing plug in the same section as in Fig. 20 and 23(B) representing the hole closing plug in the same section as in Fig. 21.

### Detailed Description of Exemplary Embodiments of the Invention

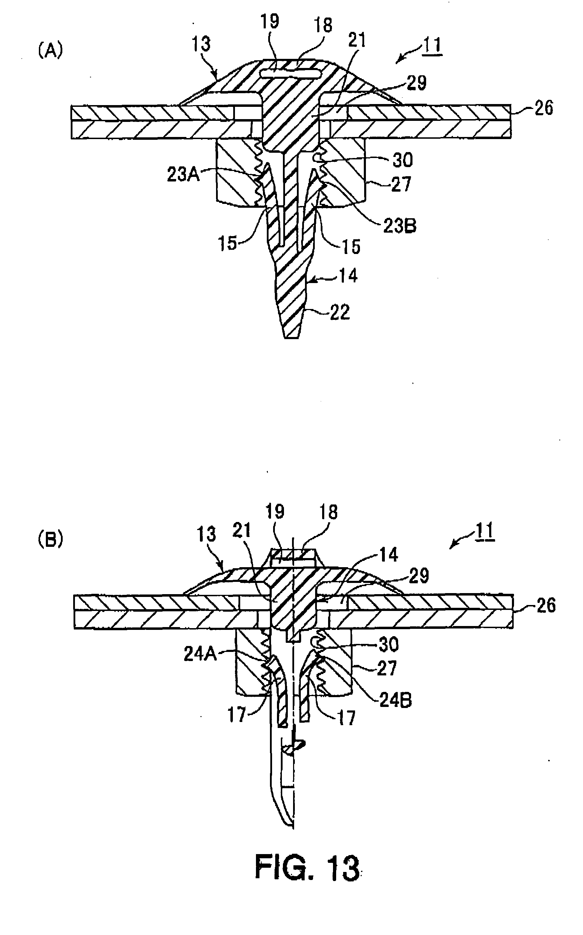

Exemplary embodiments of the present invention are now described with reference to the drawings. In Figs. 5 to 15 is diagrammed an internal thread hole closing plug 11 relating to a first embodiment for closing internal thread holes in internal thread members secured to the back surfaces of members being attached to such as automobile body panels and holes in the members being attached to. The hole closing plug 11 is integrally formed of a thermoplastic synthetic resin. This thermoplastic synthetic resin may be a comparatively hard synthetic resin material, wherein the fit will be definite when the plug is inserted into a hole so that a good fit is realized. The hole closing plug 11 comprises a flange 13 of a disk-shaped suction cup form, a column 14 that descends perpendicularly from the center of the lower surface of the flange 13 and a pair of lower elastic latching pieces 15 and a pair of upper elastic latching pieces 17 which extend from the column 14 toward the flange 13, separating away from the column 14 as they approach the flange 13. In Figs. 5 to 12, the configuration of the hole closing plug 11 is diagrammed, while in Figs. 13 to 15 is diagrammed the manner in which the hole closing plug 11 closes a hole 29 in a body panel 26 that is a member being attached to and an internal thread hole 30 in a weld nut 27 that is an internal thread member.

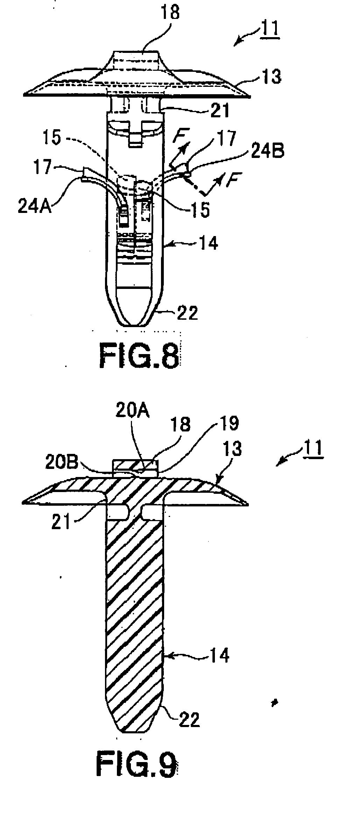

The configuration of the hole closing plug 11 is now described with reference to Figs. 5 to 12. The flange 13 is configured overall in a disk shape, the lower surface whereof is formed in a suction cup shape, the material whereof is made thinner toward the edge so that an internally threaded hole in a body panel or the like can be closed and tightly sealed. The upper surface of the flange 13 is formed overall in the shape of a substantially flat disk so that the plug can easily be pressed in with a finger or the like. Thereon is formed a protruding ridge 18, projecting upward and extending with a narrow width in the radial direction so that the hole closing plug 11 can be turned about the axis of the column 14 with a finger or the like when detaching the hole closing plug 11 from a hole. In the center of the protruding ridge 18 is formed a hole 19 which penetrates through the protruding ridge 18. In the hole 19, the tip of a tool such as a screwdriver can be inserted, whereupon the hole closing plug 11 can be pulled up by the tool tip. It is also possible to insert a cord or wire or the like which can be used to pull the plug up when detaching it. The upper surface of the flange 13 is formed flat and large, wide toward the edge thereof, being formed so that no pain will be felt in a fingertip when pushing the plug in with that fingertip. In particular, the protruding ridge 18 is formed so that as seen in a plan view, the width thereof widens toward the portions at the edges of the flange 13, being formed so that no pain will be felt in the fingertip by the projection of the protruding ridge 18. The protruding ridge 18 increases the overall strength of the flange 13, and the function of tightly sealing an internal thread hole is reinforced thereby. On the inside of the hole 19, on the ceiling of the protruding ridge 18 and on the floor surface on the flange 13 side thereof, in the center of the hole 19 as seen in Figs. 9 to 11, an upper hemispherical projection 20A and a lower hemispherical projection 20B, respectively, are formed so as to be in mutual opposition. By such hemispherical projections 20A and 20B, flexure associated with pressure on the protruding ridge 18 is limited, preventing the plug from being excessively pressed on. The hemispherical projections 20A and 20B, furthermore, engage a tool tip inserted into the hole 19 so that the tool tip will not readily pull out from the hole 19.

The column 14 is formed in a rod shape which descends perpendicularly from the center of the flange 13, The portion of the column 14 adjacent to the flange 13 is formed as a cylindrical portion 21 that will close a hole in a body panel or the like. This portion of the column may have a cylindrical shape of such size as to fit inside a hole in a member being attached to such as a body panel or the like and make it possible to align the axis of that hole and the axis of the column 14. The diameter of the cylindrical portion 21 may be formed so as to match the smallest inner diameter of the internal thread hole in view, so that the hole closing plug 11 having that cylindrical portion 21 can be used to plug internal thread holes of various sizes. The diameter of the cylindrical portion 21 is formed as a cylindrical column having a diameter that is near to, but slightly smaller than, the diameter of the internal thread hole which, of the internal thread holes to be plugged, has the smallest diameter. In the portion of the column 14 below the cylindrical portion 21, two pairs of elastic latching pieces are formed, namely: lower elastic latching pieces 15 and upper elastic latching pieces 17. The lower column portion, below the cylindrical portion 21, is formed in a plate shape of a thickness that will maintain the strength of the column 14 but so that two sides of the cylindrical column are cut away and made thinner, so as to form spaces for accommodating the elastic latching pieces 15 and 17 even when they flex at the sides of the column 14. At the tip end (lower end) portion of the column 14, a tapered guide 22 is formed of a sufficiently smaller diameter than the insertion hole, so as to readily guide the column 14 into that hole. The guide 22 is formed in a smooth hemispherical shape or the like, of smaller diameter, so as to both facilitate guidance into the hole and prevent the tip thereof from injuring a worker.

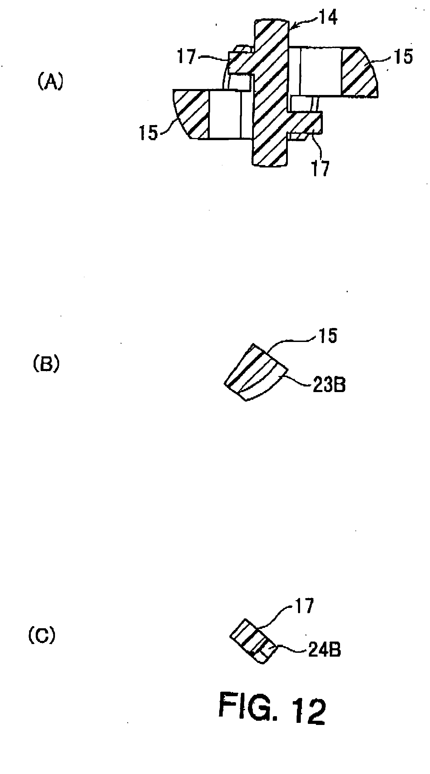

The elastic latching pieces 15 and 17 are now described. The elastic latching pieces are elastic latching pieces that extend from the tip end of the column 14 toward the flange 13, so as to separate away from the column 14 as the flange 13 is approached, and have tips for engaging the threads of an internal thread hole. The lower pair of elastic latching pieces 15, on the ends thereof nearest the guide 22 in the lower end of the column 14, extends in one radial direction centered on the axis of the column 14. The other pair, namely, the pair of upper elastic latching pieces 17, extends in another radial direction that crosses the radial direction of the lower elastic latching pieces 15 centered on the column 14 at a position between the lower elastic latching pieces 15 of the column 14 and the flange 13. Thus, the pair of lower elastic latching pieces 15 extend outwardly from the column 14 in a first plane and the upper elastic latching pieces 17 extend from the column in a second plane which is perpendicular to the first plane. These two pairs of elastic latching pieces, namely, the lower elastic latching pieces 15 and the upper elastic latching pieces 17, when passed together with the column 14 through a hole in a member being attached to such as a body panel and an internal thread hole, respectively pass through the two holes, making contact at separated positions in the circumferential direction and therefore act so as to align the axis of the column 14 with the axis of the internal thread hole. As a consequence, the flange is maintained so as to remain parallel with the member being attached to, slanted attachment is prevented, the flange edge can tightly seal to the member being attached to and the watertight properties of the hole closing plug are maintained. In the embodiment diagrammed, the one radial direction of the pair of lower elastic latching pieces 15 and the other radial direction of the pair of upper elastic latching pieces 17 cross each other at right angles. The elastic latching pieces can consequently make contact with the hole at 90-degree intervals in the circumferential direction and support the column 14 evenly. Also, the pair of lower elastic latching pieces 15 and the pair of upper elastic latching pieces 17 are formed so as to extend in radial directions such that they do not interfere with each other when they exhibit flexure deformation (cf. Fig. 12(A)).

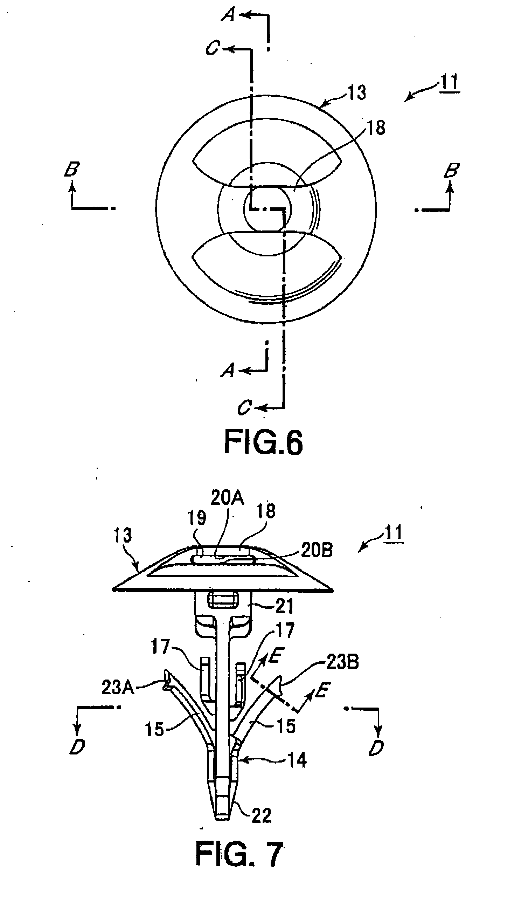

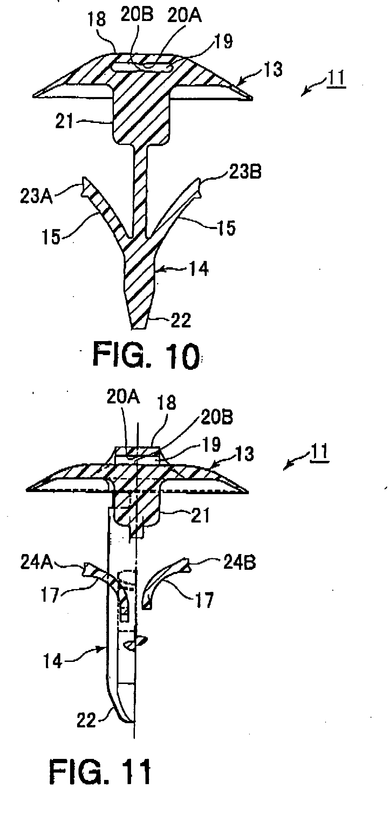

The two pairs of elastic latching pieces 15 and 17, respectively, are formed so that the tips thereof engage the thread flanks in correspondence with the lead angle of the threads of the internal thread hole. One of the tips 23A of the pair of lower elastic latching pieces 15 is formed so that relative to the other tip 23B of the pair of lower elastic latching pieces 15, the height position (where by height is meant the height in the axial direction of the column 14, and so hereinafter) at which it engages the thread flank, matched to the lead angle of the threads of the internal thread hole, differs (cf. Figs. 7 and 10). Meanwhile, one of the tips 24A of the pair of upper elastic latching pieces 17 is formed so that, relative to the other tip 24B of the pair of upper elastic latching pieces 17, the height position at which it engages the thread flank, matched to the lead angle of the threads of the internal thread hole, differs (cf. Figs. 7, 8 and 11). Because the pair of lower elastic latching pieces 15 and the pair of upper elastic latching pieces 17, respectively, engage the internal thread hole at positions that are in opposition in the radial direction, the height of one tip of each pair of elastic latching pieces will differ from that of the other tip by half the height of the thread pitch, In this manner, according to the thread lead angle, the tips of the elastic latching pieces are established at different heights, wherefore engagement can be effected such that the respective tips of the elastic latching pieces can make flush contact with the thread flanks of the internal thread hole, and thereby the alignment of the axis of the column 14 with the axis of the internal thread hole can be made even more definitely, the flange can definitely be prevented from being attached at a slant to the member being attached to, the edge of the flange can definitely make a tight seal with the member being attached to and the watertight properties of the hole closing plug are maintained at an even higher level. The shapes of the tips 23A and 23B of the lower elastic latching pieces 15 and of the tips 23A, 23B, 24A and 24B of the upper elastic latching pieces 17 should be formed so as to have inclined surfaces that will make flush contact with the inclined surfaces of the threads. When that is done, the engagement to the internal thread hole will be even more definite.

The force with which the hole closing plug 11 is inserted may be made 30 N or lower so that ergonomically, the burden on the worker does not become heavy, and the elasticity of the elastic latching pieces 15 and 17 should be determined in conjunction therewith. The elastic latching pieces 15 and 17 may have the square portions of the tips 23B (and 23A) and the tips 24B (and 24A) be rounded, as diagrammed in Figs. 12(B) and 12 (C). Thereby, excessive latching in the internal thread hole can be prevented so that, for example, when inserting the hole closing plug 11, the contact resistance can be lowered, the load on the worker lightened and when detaching it, turning the hole closing plug 11 about the axis thereof is made easy, and when attaching it, tightening is made easy.

Figs. 13(A) and 13(B) diagram the manner in which the hole closing plug 11 configured as described above closes the panel hole 29 in the body panel 26 that is a member being attached to, on the back surface whereof the weld nut 27 is secured, and the internal thread hole 30 in the weld nut 27 that is the internal thread member.

When attaching the hole closing plug 11, the guide 22 at the tip of the column 14 is positioned in the hole 29 of the body panel 26 and in the internal thread hole 30 of the weld nut 27, the protruding ridge 18 on the upper surface of the flange 13 is pressed by a finger, pushing in the column 14 as is, whereupon the lower elastic latching pieces 15 and the upper elastic latching pieces 17 topple over to the inside in the radial direction, and the column 14 and elastic latching pieces 15 and 17 are inserted into the hole 29 and the internal thread hole 30. In this insertion, the tips of each of the two pairs of elastic latching pieces 15 and 17 can be engaged so as to make flush contact with the slanted surfaces of the threads, following the lead angle of the threads of the internal thread hole. Thereby, the aligning of the axis of the column 14 with the axis of the internal thread hole is made definite, slanted attachment of the flange 13 to the body panel 26 can definitely be prevented, the flange edge can definitely seal tightly to the member being attached to, and the watertight properties of the hole closing plug are maintained at a high level. Also, because the elastic latching pieces 15 and 17 constitute pairs in radial directions, which directions cross (at right angles in the embodiment), the tips thereof make contact at separated positions in the circumferential direction the two holes, passing through there, acting so as to align the axis of the column 14 with the axis of the internal thread hole. Thereby also, the aligning of the axis of the column 14 with the axis of the internal thread hole is made definite, the edge of the flange 13 is maintained parallel to the surface of the body panel 26, slanted attachment is prevented, the flange edge can tightly seal to the member being attached to, and the watertight properties of the hole closing plug 11 are maintained at an even higher level. The tips 23A, 23B. 24A and 24B of the elastic latching pieces 15 and 17, moreover, are shaped so as to make flush contact with the thread flanks, whereupon the aligning of the axis of the column 14 with the axis of the internal thread hole is made even more definite. Thus the aligning of the axis of the column 14 with the axis of the internal thread hole is made definite, the flange 13 is prevented from attaching at a slant to the body panel 26, and the flange 13 is made to seal tightly to the body panel 26, thereby enhancing the watertight properties of the hole closing plug 11 to the ultimate limit.

When the protruding ridge 18 is pressed against, moreover, if that pressure is a strong force, the upper hemispherical projection 20A and lower hemispherical projection 20B formed inside the hole 19 between the protruding ridge 18 and the top of the flange 13 come up against each other to prevent further flexure of the protruding ridge 18. As a consequence, excessive depression of the protruding ridge 18 can be prevented.

When the plug is pushed in until the lower surface of the flange 13 makes flush contact with the body panel 26, the panel hole 29 and internal thread hole 30 will be closed by the flange 13. In the example diagrammed in Fig. 13, the body panel 26 consists of two thin panels, and the length of the weld nut 27 in the axial direction (the height) is short. The hole closing plug 11 is maintained in a condition wherein the panel hole 29 and internal thread hole 30 are closed. Thus, by the simple operation of pushing the hole closing plug 11 of comparatively simple configuration into the panel hole 29 and internal thread hole 30, internally threaded holes provided in automobile body panels and the like can be closed. If, using the protruding ridge 18 on the flange 13, the flange 13 is turned about the axis thereof in the forward direction of the threads of the body panel 26, moreover, the securing force of the hole closing plug 11 will be increased, making it possible to enhance the watertight seal of the hole closure. Also, the more the edge of the flange 13 flexes, the more will the surface of the body panel 26 be pressed against to effect a good watertight seal.

All that need be done to detach the hole closing plug 11 is to turn the flange 13 in the reverse direction of the threads of the weld nut 27. The flange 13 is turned by gripping the protruding ridge 18 with the fingers and turning the flange 13 about the axis of the column 14. When this turning is continued, the tips of the elastic latching pieces 15 and 17 will move upward along the threads of the internal thread hole 30, and by this upward movement, the hole closing plug 11 will be pulled up and away from the body panel 26. The detached hole closing plug 11 can then, as is, be reused. Moreover, when being detached using the hole 19 in the protruding ridge 18, the tip of a tool may be inserted into the hole 19 to aid in pulling the hole closing plug 11 up, or a cord or wire or the like can be passed through the hole 19 and the pulling up on the hole closing plug 11 aided by pulling up on the cord or wire. When a tool tip is inserted into the hole 19, the upper hemispherical projection 20A and lower hemispherical projection 20B formed inside the hole 19 of the protruding ridge 18 will engage the tool tip, thereby preventing the tool tip from pulling out from the hole 19 and eliminating the burden of being unable to extract a detached hole closing plug 11 from a tight space.

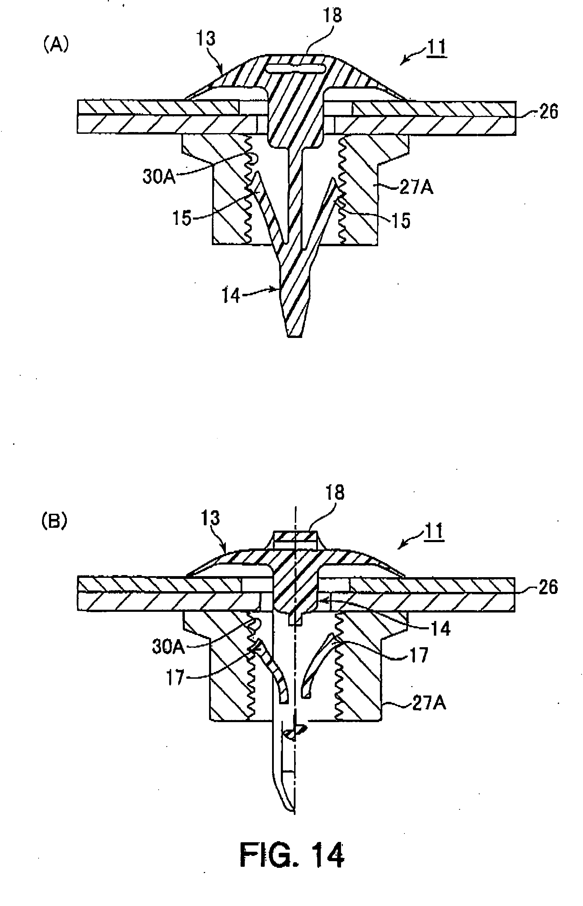

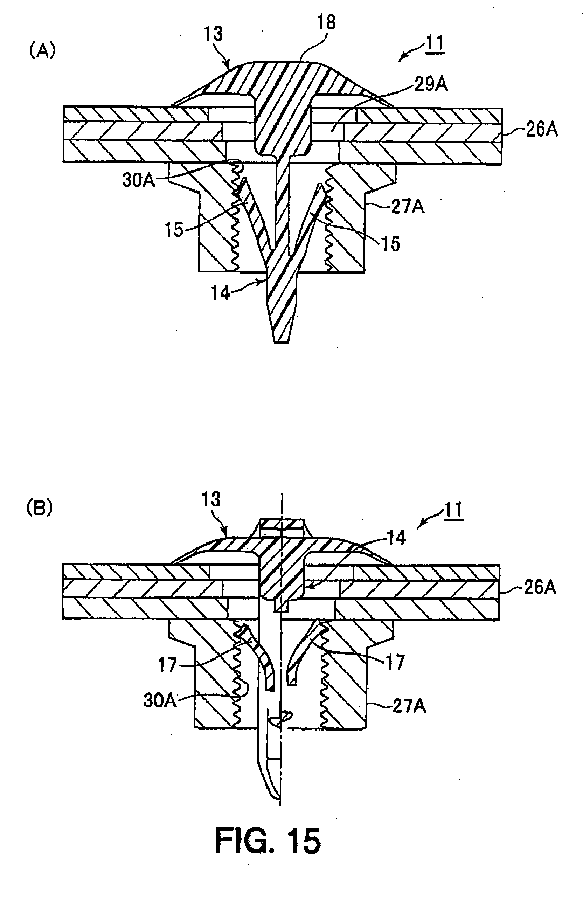

In the example diagrammed in Fig. 13, the weld nut 27 that is the internal thread member is an M8 nut, and the thickness of the body panel(s) constituting the member being attached to is 3.6 mm. In Fig. 14 is diagrammed an example wherein a weld nut 27A that is longer in the axial direction than the weld nut 27 is secured to the body panel 26. The weld nut 27A in this example is an M10 nut. In this case also, with the hole closing plug 11, because the axis of the column 14 aligns with the axis of the internal thread hole, closure will be effected such that the panel hole 29A and the internal thread hole 30A are definitely sealed by the flange 13. In Fig. 15 is diagrammed an example wherein a weld nut 27A that is long in the axial direction is secured to a body panel 26A that is thicker than the body panel 26 (the former thickness being 5.9 mm, for example). In this case also, with the hole closing plug 11, because the axis of the column 14 aligns with the axis of the internal thread hole, closure will be effected such that the panel hole 29A and the internal thread hole 30A are definitely sealed by the flange 13. The weld nut in Fig. 15, moreover, is an M12 nut, for example. In these examples also, the hole closing plug 11 is detached by turning the flange 13 about the axis of the column 14.

The exemplary embodiment of the hole closing plug 11 as described above provides good fitting properties when inserted into a nut hole, good attachment workability, ability to prevent dropping out associated with vibration or the like after being fitted in, watertight sealing properties, ease of detachment and reusability after detachment. In addition, the aligning of the axis of the column 14 with the axis of the internal thread hole is made definite, slanted attachment of the flange 13 to the body panel 26 is prevented, and the flange 13 is made to tightly seal to the body panel 26, thereby enhancing the watertight properties of the hole closing plug 11 to the ultimate limit.

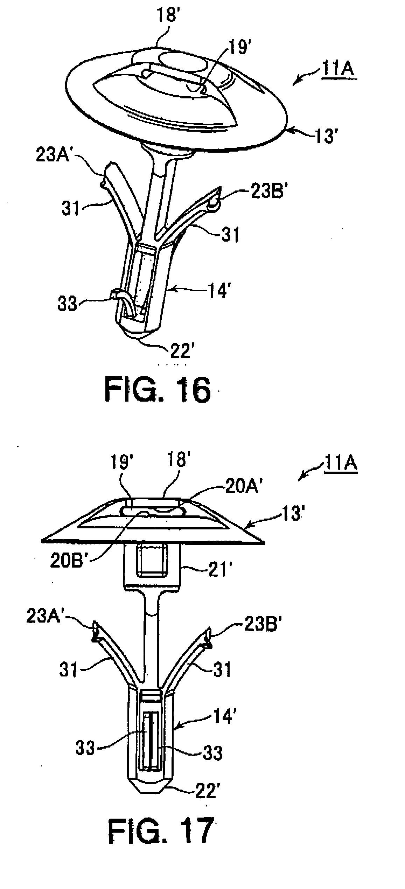

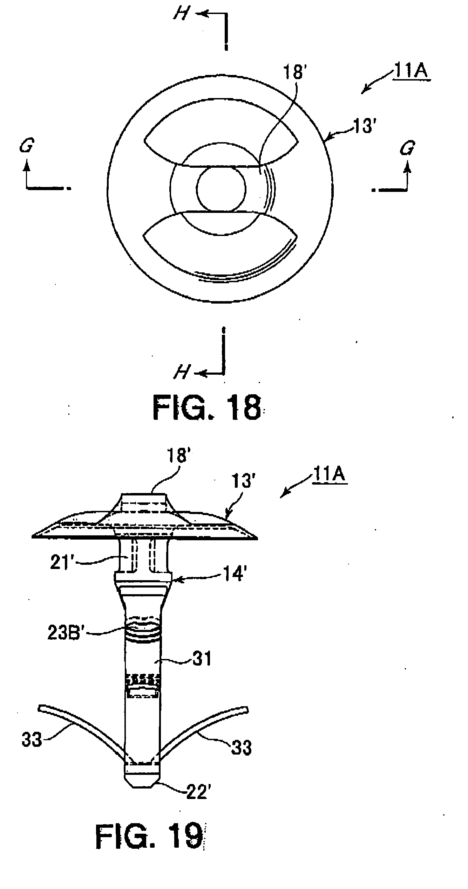

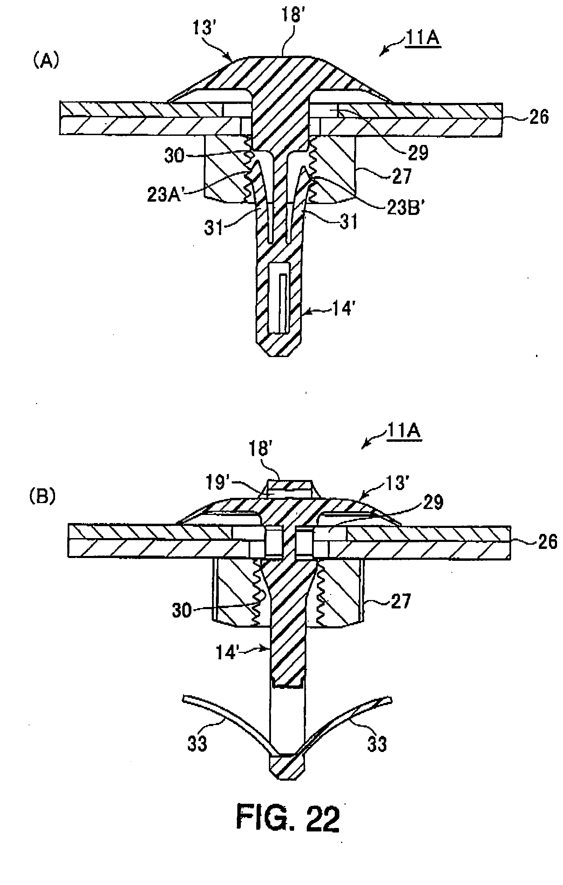

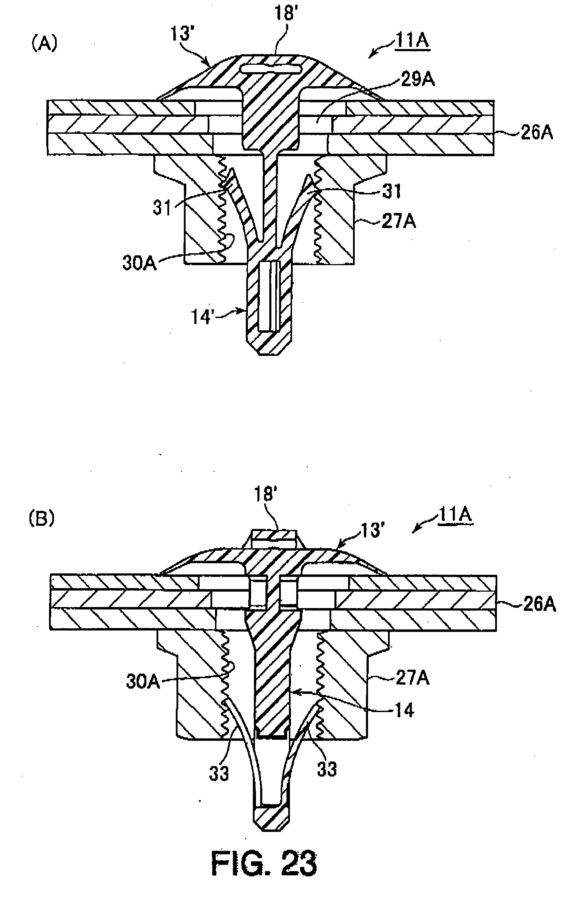

Figs. 16 to 23 diagram a hole closing plug 11A relating to a second embodiment of the present invention. Figs. 16 to 21 diagram the configuration of the hole closing plug 11A, while Figs. 22 and 23 diagram the manner in which the hole closing plug 11A closes holes in a body panel and weld nut. The hole closing plug 11A relating to the second embodiment has many configuring elements that are similar to those of the hole closing plug 11 relating to the first embodiment. Configuring elements of the hole closing plug 11A that are the same as or similar to those of the hole closing plug 11 are designated by a corresponding symbol to which a prime symbol' is added. No detailed descriptions of these configuring elements are given, wherefore the descriptions of the corresponding configuring elements of the hole closing plug 11 should be referred to.

In the hole closing plug 11A, there is a first pair of elastic latching pieces 31, and another pair of elastic latching pieces 33 formed from the tip of the column 14'.

The hole closing plug 11A is integrally formed of a thermoplastic synthetic resin. Such thermoplastic synthetic resin may be a comparatively hard synthetic resin material or a comparatively soft synthetic resin material. The hole closing plug 11A comprises a flange 13' of a disk-shaped suction cup form, a column 14' that descends perpendicularly from the center of the lower surface of the flange 13', a pair of elastic latching pieces 31 that extend from the column 14' toward the flange 13', separating away from the column 14' as they approach the flange 13', and a pair of elastic pieces 33 that extend from the tip (lower end) of the column 14' toward the flange 13', separating away from the column 14'. The lower surface of the flange 13' is formed in a suction cup shape, the material whereof is made thin so that an internally threaded hole in a body panel or the like can be closed and tightly sealed. The upper surface of the flange 13' is formed overall in the shape of a substantially flat disk so that the plug can easily be pressed in with a finger or the like. Thereon is formed a protruding ridge 18', projecting upward and extending with a narrow width in the radial direction, so that the hole closing plug 11A can be turned about the axis of the column 14' with a finger or the like when detaching the hole closing plug 11A from a hole. In the center portion of the protruding ridge 18' is formed a hole 19', wherein the tip of a tool such as a screwdriver can be inserted, whereupon the plug can be pulled up by the tool tip, and an upper hemispherical projection 20A' and lower hemispherical projection 20B' are formed, so as to be in mutual opposition, limiting the flexure of the protruding ridge 18' and preventing excessive pressing and engaging a tool tip inserted into the hole 19' to prevent the tool tip from pulling out. The portion of the column 14' adjacent to the flange 13' is formed as a cylindrical portion 21' that will fit inside a hole in a body panel or the like and make it possible to align the axis of that hole and the axis of the column 14'. The portion of the column 14' below the cylindrical portion 21' is formed as a plate-shaped member of a thickness that will maintain the strength of the column, but such that two sides of the cylindrical column are cut away and made thinner so that the elastic latching pieces 31 and elastic pieces 33 can flex at the sides of the column 14'. At the tip end (lower end) portion of the column 14', a tapered guide 22' is formed, of a sufficiently smaller diameter than either the hole in the member being attached to or the internal thread hole, so as to readily guide the column into those holes.

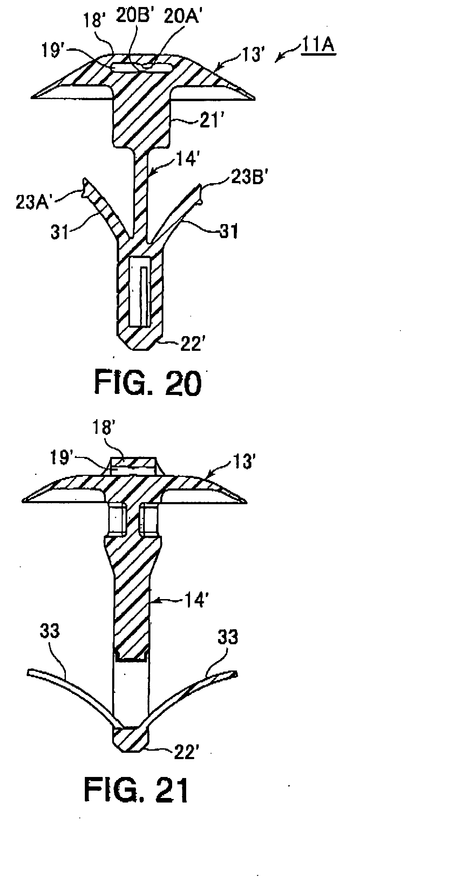

Lower than the cylindrical portion 21' in the column 14' at a position of intermediate height, a pair of elastic latching pieces 31 is formed, extending in one radial direction, centered on the column 14'. In the column 14', moreover, a pair of elastic pieces 33 is formed, extending in another radial direction which crosses the radial direction of the elastic latching pieces 31, centered on the column 14' in the vicinity of the tip end (lower end) of the column 14'. Each of the elastic latching pieces 31' is an elastic latching piece extending from the tip end of the column 14' toward the flange 13' so as to separate away from the column 14' as the flange 13' is approached, having, moreover, tips 23A' and 23B' for engaging the threads of an internal thread hole. Each of the tips 23A' and 23B' of the elastic latching pieces 31 is formed so as to engage the thread flanks of the internal thread hole in correspondence with the lead angle of the threads thereof. One tip 23A' of the elastic latching pieces 31, furthermore, is formed so that the height position (that height being the height in the axial direction of the column 14) at which it engages the thread flank, matching the lead angle of the threads of the internal thread hole, is different from that of the other tip 23B' of the pair of elastic latching pieces 31 (cf. Figs. 17 and 20). Because the pair of elastic latching pieces 31 engages the internal thread hole at positions which are in opposition in the radial direction, the height of one tip of the elastic latching pieces 31 will differ from that of the other tip by a height that is half the pitch of the threads. In this manner, according to the thread lead angle, the tips of the elastic latching pieces are established at different heights, wherefore engagement can be effected such that the respective tips of the elastic latching pieces can make flush contact with the thread flanks of the internal thread hole and thereby, the alignment of the axis of the column 14' with the axis of the internal thread hole can be made even more definite, the flange can definitely be prevented from being attached at a slant to the member being attached to, the edge of the flange can definitely make a tight seal with the member being attached to and the watertight properties of the hole closing plug can be maintained at an even higher level.

The pair of elastic latching pieces 31 and the pair of elastic pieces 33 extend in directions that cross, centered on the column 14'. In the embodiment diagrammed, this crossing is at right angles. When the pair of elastic latching pieces 31 and the pair of elastic pieces 33 are passed together with the column 14' through the hole in the body panel or other member being attached to and the internal thread hole, they make contact, respectively, at positions which are separated in the circumferential direction of the two holes. When the one radial direction of the elastic latching pieces 31 and the other radial direction of the elastic pieces 33 cross at right angles as in the embodiment diagrammed, the elastic latching pieces and the elastic pieces make contact at 90-degree intervals in the circumferential direction of the hole. For that reason, these elastic latching pieces 31 and elastic pieces 33 act so as to align the axis of the column 14' with the axis of the internal thread hole. As a consequence, the flange 13' is maintained parallel to the member being attached to, slanted attachment is prevented, the edge of the flange 13' can tightly seal to the member being attached to and the watertight properties of the hole closing plug are maintained at a high level. In the embodiment diagrammed, the elastic pieces 33 are not means for latching to the internal thread hole, but are rather for aligning the axis of the column 14' with the axis of the internal thread hole.

In Figs. 22(A) and 22(B) is diagrammed the manner in which the hole closing plug 11A, configured as described above, closes an internal thread hole 30 and a hole 29 in a body panel 26 that is a member being attached to, to the back surface whereof is secured a weld nut 27 that is an internal thread member. In attaching the hole closing plug 11A, the upper surface of the flange 13' is pressed against with a finger, whereupon the column 14' is pushed in, and the elastic pieces 33 and elastic latching pieces 31 topple over to the inside in radial directions. When the plug is pushed in until the lower surface of the flange 13' makes flush contact with the body panel 26, the panel hole 29 and internal thread hole 30 are closed by the flange 13'. During this pushing in, the elastic latching pieces 31 can effect engagement such that the tips 23A' and 23B' make flush contact with the thread flanks, in correspondence with the lead angle of the threads of the internal thread hole. Thereby, the axis of the column 14' is definitely aligned with the axis of the internal thread hole 30, the flange 13' can be definitely prevented from being attached at a slant to the body panel 26, the edge of the flange 13' can definitely seal tightly to the body panel 26, and the watertight properties of the hole closing plug 11A are maintained at a high level. Moreover, the elastic latching pieces 31 and elastic pieces 33 form pairs in radial directions that cross (at right angles in the embodiment); wherefore the tips thereof pass through, making contact at positions that are separated in the circumferential direction of the two holes and acting so as to align the axis of the column 14' with the axis of the internal thread hole. For that reason also, the axis of the column 14' is definitely aligned with the axis of the internal thread hole 30, the edge of the flange 13' is maintained parallel with the surface of the body panel 26, slanted attachment is prevented, the flange edge can tightly seal to the member being attached to and the watertight properties of the hole closing plug 11 are maintained at an even higher level. Furthermore, because the tips 23A, 23B. 24A and 24B of the elastic latching pieces 15 and 17 are formed so as to make flush contact with the thread flanks, the alignment of the axis of the column 14 with the axis of the internal thread hole is made even more definite. In this manner, the aligning of the axis of the column 14 with the axis of the internal thread hole is made definite, the flange 13' is prevented from attaching at a slant with the body panel 26, the flange 13' is made to seal tightly to the body panel 26, and the watertight properties of the hole closing plug 11A are enhanced to the ultimate limit.

In Fig. 22, the body panel 26 is a thin panel, and the length in the axial direction (height) of the weld nut 27 is short. Accordingly, when the flange 13' is flush up against the body panel 26, the elastic pieces 33 pass through the weld nut 27. The tips of the elastic latching pieces 31 latch on the threads of the internal thread hole 30, and the hole closing plug 11A is maintained in a condition wherein the panel hole 29 and internal thread hole 30 are closed. To detach the hole closing plug 11A, the flange 13' is turned in the reverse direction of the threads of the weld nut 27. To turn the flange 13', the protruding ridge 18' is grasped with the fingers and the flange 13' is turned about the axis of the column 14'; whereupon the tips of the elastic latching pieces 31 move upward along the threads of the internal thread hole 30, thus making preparation for the hole closing plug 11A to be pulled up from the body panel 26. Because the elastic pieces 33 are passed through the weld nut 27 while the hole closing plug 11A is being pulled up and out of the hole closing plug 11A, the tips of the elastic pieces 33 come up against the weld nut 27, and the pulling up stops. Thereupon, the tip of a tool is inserted in the hole 19' of the protruding ridge 18', or a cord or wire is passed through there, to aid the pulling up of the hole closing plug 11A. If the hole closing plug 11A is molded of a comparatively soft synthetic resin, while it is being pulled up, the elastic pieces 33 can be turned through substantially 180 degrees, and the hole closing plug 11A can be pulled out from the panel hole 29 and the internal thread hole 30. As a consequence, the hole closing plug 11A can be reused.

Fig. 23 diagrams a case wherein a long weld nut 27A of large diameter is secured to a thick body panel 26A. In this case, the tips of the elastic latching pieces 31 of the hole closing plug 11A engage the threads of the internal thread hole 30A. Also, the tips of the elastic pieces 33 come up against the threads of the internal thread hole 30A. In this example, the hole closing plug 11A effects closure so that the flange 13' definitely seals off the panel hole 29A and the internal thread hole 30A. The hole closing plug 11A is detached by turning the flange 13'.

As described above, the hole closing plug 11A provides good fitting properties when inserted into a nut hole, good attachment workability, the ability to prevent dropping out associated with vibration or the like after being fitted in, watertight sealing properties and ease of detachment. Furthermore, when molded of a comparatively soft synthetic resin, the hole closing plug 11A may also be reusable after detachment, whereupon the watertight properties of the hole closing plug 11A are enhanced.

Although exemplary embodiments of the present invention have been shown and described, it will be appreciated by those skilled in the art that changes may be made to these embodiments without departing from the principles and spirit of the invention, the scope of which is defined in the appended claims and their equivalents.

## Claims

1. An internal thread hole closing plug for closing an internal thread hole in an internal thread member secured to the back surface of a member being attached to, such as a panel, and closing a hole in said member being attached to, comprising:
a flange of a size that will close the hole in said member being attached to; a column extending perpendicularly downward from said flange; and at least one pair of elastic latching pieces extending from a tip end of said column toward said flange and separating away from said column as said flange is approached; wherein:
said elastic latching pieces are formed so that the tips thereof, in correspondence with the lead angle in the thread flanks of said internal thread, engage said thread flanks; whereupon when said column and said elastic latching pieces are inserted into the hole in said member being attached to and into said internal thread hole, the respective tips of said at least one pair of elastic latching pieces engage the thread flanks of said internal thread hole, acting so as to align the axis of said column with the axis of said internal thread hole and said flange closes the hole in said member being attached to and said internal thread hole such that the axis of said column is aligned with the axis of said internal thread hole.

2. The hole closing plug according to claim 1, wherein said elastic latching pieces comprise, at the tip end of said column, one pair of lower elastic latching pieces extending in one radial direction centered on said column and one pair of upper elastic latching pieces extending in another radial direction centered on said column between said lower elastic latching pieces and said flange, and crossing said lower elastic latching pieces, said lower elastic latching pieces and upper elastic latching pieces acting, when said column passes through said internal thread hole, so as to align the axis of said column with the axis of said internal thread hole.

3. The hole closing plug according to claim 2, wherein said one radial direction of said lower elastic latching pieces and said other radial direction of said upper elastic latching pieces are perpendicular.

4. The hole closing plug according to claim 3, wherein one tip end of said pair of lower elastic latching pieces and one tip end of said pair of upper elastic latching pieces are formed so that the height position at which they engage said thread flanks, matched with the lead angle of the threads of said internal thread hole, is different from that of the other tip end of said pair of lower elastic latching pieces and that of the other tip end of said pair of upper elastic latching pieces.

5. The hole closing plug according to any of claims 1 - 4, wherein said elastic latching pieces comprise one pair of elastic latching pieces extending in one radial direction centered on said column at an intermediate height position of said column; a pair of elastic pieces is provided in said column, extending in another radial direction, centered on said column in the vicinity of the tip end of said column and crossing said elastic latching pieces; and said elastic latching pieces and said elastic pieces act, when said column passes through said internal thread hole, so as to align the axis of said column with the axis of said internal thread hole.

6. The hole closing plug according to claim 5, wherein said one radial direction of said elastic latching pieces and said other radial direction of said elastic pieces are perpendicular.

7. The hole closing plug according to claim 6, wherein one tip of said one pair of elastic latching pieces is formed so that the height position at which it engages said thread flanks, matched with the lead angle of the threads of said internal thread hole, is different from the other tip of said one pair of elastic latching pieces.

8. The hole closing plug according to any of claims 1 - 7, wherein said hole closing plug is integrally molded of a thermoplastic synthetic resin.

9. The hole closing plug according to any of claims 1 - 8, wherein on the upper surface of said flange, a protruding ridge is formed for turning said flange about the axis of said column.

10. The hole closing plug according to claim 9, wherein in said protruding ridge, a hole is formed.

11. The hole closing plug according to claim 10, wherein in said hole in said protruding ridge, a hemispherical protrusion is formed for narrowing the gap between said protruding ridge and said flange in a portion of said hole on the inside.

12. A hole closing plug comprising:
a flange;
a column extending from the flange;
a pair of first elastic latching pieces extending radially outwardly from the column and toward the flange; and
a pair of second elastic latching pieces extending radially outwardly from the column and toward the flange, the second pair of elastic latching pieces being located at an axial position between the first pair of elastic latching pieces and the flange;
wherein the first pair of elastic latching pieces extend outwardly from the column in a first plane and wherein the second pair of elastic latching pieces extend outwardly from the column in a second plane.

13. A hole closing plug according to claim 12, wherein the first plane and the second plane are perpendicular.

14. A hole closing plug according to claim 12 or 13, wherein the flange is disked shape and includes an outer edge portion which is thinner than a central portion.

15. A hole closing plug according to any of claims 12 - 14, wherein each of the first pair of elastic latching pieces include tip ends and wherein when the first pair of elastic latching pieces are in a relaxed state, the tip ends are at different axial height positions.

16. A hole closing plug according to any of claims 12 - 15, wherein the column comprises top, middle and bottom sections, the top section comprising a substantially cylindrical shape and being adjacent to the flange.
Wherein the bottom section is distal from the flange and is tapered at an end; and
Wherein the middle section is narrower than the top and bottom sections.

17. A hole closing plug according to claim 16, wherein the first pair of elastic latching pieces extend from a top of the bottom section; and
wherein the second pair of elastic latching pieces extend from the middle section.

18. A hole closing plug assembly, comprising:
a body panel including a hole
a nut adjacent to the body panel and including an internal thread hole aligned with the hole in the body panel;
a plug, the plug comprising a flange, a column extending from the flange, a pair of first elastic latching pieces extending radially outwardly from the column and toward the flange, and a pair of second elastic latching pieces extending radially outwardly from the column and toward the flange, the second pair of elastic latching pieces being located at an axial position between the first pair of elastic latching pieces and the flange;
wherein the flange is bigger than the hole in the body panel and is adjacent one side of the body panel;
wherein the column extends from the flange through the hole in the body panel and the internal thread hole;
wherein tip ends of the pair of first elastic latching pieces and the pair of second elastic latching pieces engage threads of the internal thread hole.

19. A hole closing plug according to claim 18, wherein the tip ends of the pair of first elastic latching pieces and the pair of second elastic latching pieces engage the internal thread hole at 90 degree increments from one another.

20. A hole closing plug according to claim 18 or 19, wherein the tip ends of the pair of elastic latching pieces and the pair of second elastic latching pieces each engage the internal thread hole at different axial height positions.
